# EUROPEAN PATENT APPLICATION

(11) **EP 3 816 227 A1**
(43) Date of publication of application: **05.05.2021**
(21) Application number: 19804249.1
(22) Date of filing: 10.05.2019
(51) Int. Cl.: C08L 33/02, C08F 290/06, C08G 18/62, C08G 59/40, C09K 5/06

(54) **RESIN COMPOSITION, HEAT STORAGE MATERIAL, AND ARTICLE**

(30) Priority: 15.05.2018 JP 2018093540; 26.07.2018 JP 2018140167; 14.11.2018 WO PCT/JP2018/042156
(71) Applicant: Showa Denko Materials Co., Ltd., Tokyo 100-6606 (JP)
(72) Inventor: FURUKAWA, Naoki, Tokyo 100-6606 (JP); MORIMOTO, Tsuyoshi, Tokyo 100-6606 (JP); SANO, Atsuko, Tokyo 100-6606 (JP); YOKOTA, Hiroshi, Tokyo 100-6606 (JP); MATSUBARA, Nozomi, Tokyo 100-6606 (JP); NAGAI, Akira, Tokyo 100-6606 (JP); KIZAWA, Keiko, Tokyo 100-6606 (JP)
(74) Representative: Becker, Eberhard
(86) International application number: PCT/JP2019/018799
(87) International publication number: WO 2019/221032

(57) **Abstract**

An aspect of the present invention is a resin composition containing an acrylic resin obtained by polymerizing a monomer component including: a first monomer represented by formula (1); and a second monomer copolymerizable with the first monomer and having a reactive group. 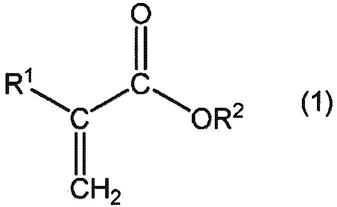 [In the formula, R¹ represents a hydrogen atom or a methyl group, and R² represents a group having a polyoxyalkylene chain.]

## Description

### [Technical Field]

The present invention relates to a resin composition, a heat storage material, and an article.

### [Background Art]

A heat storage material is a material from which stored energy can be extracted as heat as necessary. A heat storage material is used for applications, such as for example, electronic components such as in an air conditioning device, a floor heating device, a refrigerator, and an IC chip, automobile components such as in an automobile interior and exterior materials, a canister, and an insulation container.

Regarding a heat storage method, latent heat storage using a phase change in a substance is widely used in consideration of the amount of heat. Water-ice is well-known as a latent heat storage substance. Water-ice is a substance having a large amount of heat, but its phase change temperature is limited to 0°C in the atmosphere, and thus its application range is also limited. Therefore, paraffin is used as a latent heat storage substance having a phase change temperature of higher than 0°C and 100°C or lower. However, paraffin becomes a liquid when its phase changes due to heating, and has a risk of ignition and combustion. Therefore, in order to use paraffin as a heat storage material, it is necessary to store it in a closed container such as a bag, and prevent paraffin from leaking from the heat storage material, and thus its application fields are limited.

Therefore, regarding a method of improving a heat storage material containing paraffin, for example, a method using a gelling agent is disclosed in Patent Literature 1. The gel produced by this method can be maintained as a gel-like molded product even after the phase of paraffin has changed. However, in this method, when used as a heat storage material, liquid leakage, volatilization of the heat storage material, and the like can occur.

In addition, regarding another improvement method, for example, a method using a hydrogenated conjugated diene copolymer is disclosed in Patent Literature 2. In this method, a form thereof can be maintained near a melting or solidification temperature of a hydrocarbon compound, but at a higher temperature, phase separation occurs due to low compatibility, and liquid leakage of the hydrocarbon compound occurs.

### [Citation List]

### [Patent Literature]

### [Patent Literature 1]

Japanese Patent Laid-Open No. 2000-109787

### [Patent Literature 2]

Japanese Patent Laid-Open No. 2014-95023

### [Summary of Invention]

### [Technical Problem]

In an aspect, an objective of the present invention is to provide a resin composition that is suitably used as a heat storage material. In another aspect, an objective of the present invention is to provide a heat storage material having an excellent heat storage capacity. [Solution to Problem]

The inventors conducted extensive studies and as a result, found that a resin composition containing an acrylic resin (an acrylic resin including a specific structural unit having a polyoxyalkylene chain) obtained from a specific monomer having a polyoxyalkylene chain is suitably used as a heat storage material, that is, a heat storage material formed of the resin composition has an excellent heat storage capacity, and completed the present invention. The present invention provides the following [1] to [18] in some aspects.
[1] A resin composition including an acrylic resin obtained by polymerizing monomer components including a first monomer represented by the following Formula (1) and a second monomer copolymerizable with the first monomer and having a reactive group: 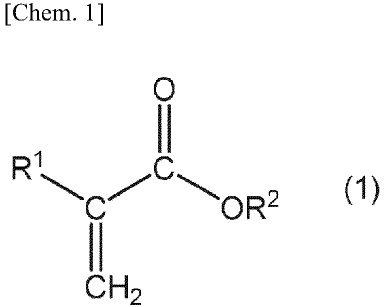 [in the formula, R¹ represents a hydrogen atom or a methyl group, and R² represents a group having a polyoxyalkylene chain].
[2] The resin composition according to [1], further including
   a capsule containing a heat storage component.
[3] A resin composition including an acrylic resin including a first structural unit represented by the following Formula (2) and a second structural unit having a reactive group: 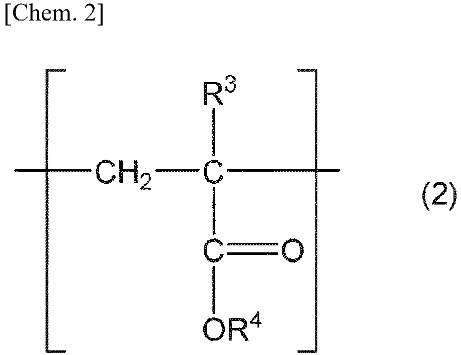 [in the formula, R³ represents a hydrogen atom or a methyl group, and R⁴ represents a group having a polyoxyalkylene chain].
[4] The resin composition according to [3], further including
   a capsule containing a heat storage component.
[5] The resin composition according to any one of [1] to [4], further including a curing agent that is able to react with the reactive group.
[6] The resin composition according to [5], wherein the curing agent is at least one curing agent selected from the group consisting of an isocyanate curing agent, a phenolic curing agent, an amine curing agent, an imidazole curing agent and an acid anhydride curing agent.
[7] The resin composition according to any one of [1] to [6], wherein the reactive group is at least one group selected from the group consisting of a carboxyl group, a hydroxyl group, an isocyanate group, an amino group and an epoxy group.
[8] The resin composition according to [1] or [2], wherein the content of the first monomer is 60 parts by mass or more with respect to 100 parts by mass of the monomer components.
[9] The resin composition according to any one of [1], [2] and [8], wherein the content of the second monomer is 25 parts by mass or less with respect to 100 parts by mass of the monomer components.
[10] The resin composition according to [3] or [4], wherein the content of the first structural unit is 60 parts by mass or more with respect to 100 parts by mass of all structural units constituting the acrylic resin.
[11] The resin composition according to any one of claims [3], [4] and [10], wherein the content of the second structural unit is 25 parts by mass or less with respect to 100 parts by mass of all structural units constituting the acrylic resin.
[12] The resin composition according to any one of [1] to [11], wherein the content of the acrylic resin is 30 mass% or more with respect to a total amount of the resin composition.
[13] The resin composition according to any one of [1] to [12], wherein the reactive group is an epoxy group.
[14] The resin composition according to any one of [1] to [13], wherein the resin composition is a liquid at 80°C.
[15] The resin composition according to [14], wherein the viscosity at 80°C is 100 Pa·s or less.
[16] The resin composition according to any one of [1] to [15], wherein the resin composition is used to form a heat storage material.
[17] A heat storage material including a cured product of the resin composition according to any one of [1] to [16].
[18] An article, including: a heat source; and a cured product of the resin composition according to any one of [1] to [16], the cured product provided to be in thermal contact with the heat source.

### [Advantageous Effects of Invention]

According to an aspect of the present invention, it is possible to provide a resin composition that is suitably used as a heat storage material. According to another aspect of the present invention, it is possible to provide a heat storage material having an excellent heat storage capacity. In addition, a heat storage material according to an aspect of the present invention can minimize liquid leakage at a phase change temperature of the heat storage material or higher and has favorable heat resistance.

### [Brief Description of Drawings]

Fig. 1 shows schematic cross-sectional views explaining a method of forming a heat storage material according to one embodiment.
Fig. 2 shows schematic cross-sectional views explaining a method of forming a heat storage material according to another embodiment.
Fig. 3 shows schematic cross-sectional views explaining an article in which a heat storage material is formed according to another embodiment.

### [Description of Embodiments]

Embodiments of the present invention will be appropriately described below in detail with reference to the drawings. Here, the present invention is not limited to the following embodiment.

In this specification, "(meth)acrylate" means "acrylate" and its corresponding "methacrylate," and "(meth)acryloyl" means "acryloyl" and its corresponding "methacryloyl."

The weight average molecular weight (Mw) and the number average molecular weight (Mn) in this specification mean values which are measured using gel permeation chromatography (GPC) under the following conditions and determined using a polystyrene as a standard substance.
- Measurement instrument: HLC-8320GPC (product name, commercially available from Tosoh Corporation)
- Analysis column: TSKgel SuperMultipore HZ-H (3 columns connected) (product name, commercially available from Tosoh Corporation)
- Guard column: TSKguardcolumn SuperMP (HZ)-H (product name, commercially available from Tosoh Corporation)
- Eluent: THF
- Measurement temperature: 25°C

In this specification, "heat resistance is favorable" means that a 1% weight loss temperature in TG-DTA measurement is 200°C or higher.

A resin composition according to one embodiment contains an acrylic resin. The acrylic resin is a polymer obtained by polymerizing monomer components including a first monomer and a second monomer.

The first monomer is represented by the following Formula (1).

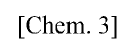

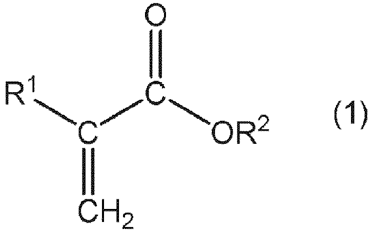

In the formula, R¹ represents a hydrogen atom or a methyl group, and R² represents a group having a polyoxyalkylene chain.

The group having a polyoxyalkylene chain represented by R² may be group represented by the following Formula (3)

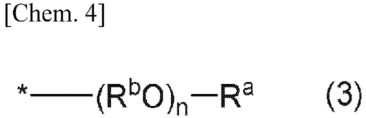

In the formula, R^{a} represents a hydrogen atom or an alkyl group having 1 to 18 carbon atoms, R^{b} represents an alkylene group, n represents an integer of 2 or more, and * indicates a bond.

The alkyl group represented by R^{a} may be linear or branched. The number of carbon atoms of the alkyl group represented by R^{a} is preferably 1 to 15, more preferably 1 to 10, and still more preferably 1 to 5. R^{a} is particularly preferably a hydrogen atom or a methyl group.

The alkylene group represented by R^{b} may be linear or branched. R^{b} may be, for example, an alkylene group having 2 to 4 carbon atoms. A plurality of R^{b}'s in the polyoxyalkylene chain may be the same as or different from each other. The polyoxyalkylene chain preferably has one or two or more selected from the group consisting of an oxyethylene group, an oxypropylene group and an oxybutylene group, more preferably has one or two selected from the group consisting of an oxyethylene group and an oxypropylene group, and still more preferably has only an oxyethylene group.

In order to obtain a superior heat storage capacity of the heat storage material, n is preferably an integer of 4 or more, 6 or more, 9 or more, 10 or more, or 15 or more, an integer of 90 or less, 80 or less, 60 or less, 40 or less, or 30 or less, or an integer of 2 to 90, 4 to 80, 6 to 60, 9 to 40, 9 to 30, 10 to 30, 15 to 30, or 15 to 25.

In other words, the first monomer may be a (meth)acrylate having a group having a polyoxyalkylene chain represented by Formula (3) at the end of an ester group. The first monomer is at least one selected from the group consisting of polyethylene glycol (meth)acrylate (in Formula (3), n represents an integer of 2 to 90; the same applies hereinafter), methoxy polyethylene glycol (meth)acrylate, polypropylene glycol (meth)acrylate, methoxy polypropylene glycol (meth)acrylate, polybutylene glycol (meth)acrylate, and methoxy polybutylene glycol (meth)acrylate.

Regarding the first monomer represented by Formula (1), a commercial product can be used. Examples of commercial products used as the first monomer include PP-500, PP-800, PP-1000, AP-400, AP-550, AP-800, 700PEP-350B, 10PEP-550B, 55PET-400, 30PET-800, 55PET-800, 30PPT-800, 50PPT-800, 70PPT-800, PME-100, PME-200, PME-400, PME-1000, PME-4000, AME-400, 50POEP-800B, and 50AOEP-800B (commercially available from NOF Corporation), Light Ester 130MA and 041MA, Light Acrylate 130A, and Light Acrylate NP-4EA (commercially available from Kyoeisha Chemical Co., Ltd.), MA-30, MA-50, MA-100, MA-150, RMA-1120, RMA-564, RMA-568, RMA-506, MPG130-MA, Antox MS-60, MPG-130MA, RMA-150M, RMA-300M, RMA-450M, RA-1020, RA-1120, and RA-1820 (commercially available from Nippon Nyukazai Co., Ltd.), Methoxy polyethylene glycol acrylate AM30G(n3), AM90G(n9), AM130G(n13), and AM230G(n23), and methoxy polypropylene glycol acrylate AM30PG, M40G, M-90G, M130G, and M-230G (commercially available from Shin-Nakamura Chemical Co., Ltd.), ELEMINOL RS-30 (commercially available from Sanyo Chemical Industries, Ltd.), and Bisomer MPE400A, Bisomer MPE550A, and the like (commercially available from Osaka Organic Chemical Industry Ltd.).

The content of the first monomer may be 20 parts by mass or more, 25 parts by mass or more, or 30 parts by mass or more with respect to 100 parts by mass of the monomer components, and in order to obtain a superior heat storage capacity when the heat storage material is formed, the content is preferably 60 parts by mass or more, more preferably 80 parts by mass or more, still more preferably 85 parts by mass or more, and particularly preferably 90 parts by mass or more, and may be, for example, 98 parts by mass or less.

The second monomer is a monomer (reactive monomer) which is copolymerizable with the first monomer and has a reactive group. The second monomer has a group having an ethylenically unsaturated bond (ethylenically unsaturated group) so that it is copolymerizable with the first monomer. Examples of ethylenically unsaturated groups include a (meth)acryloyl group, a vinyl group, and an allyl group. The second monomer is preferably a monomer having a reactive group and a (meth)acryloyl group (a (meth)acrylic monomer having a reactive group).

The reactive group in the second monomer is a group that can react with a curing agent to be described below, and is, for example, at least one group selected from the group consisting of a carboxyl group, a hydroxyl group, an isocyanate group, an amino group and an epoxy group. That is, the second monomer is, for example, a carboxyl group-containing monomer, a hydroxyl group-containing monomer, an isocyanate group-containing monomer, an amino group-containing monomer or an epoxy group-containing monomer. In one embodiment, the reactive group may be at least one group selected from the group consisting of a hydroxyl group, an isocyanate group, an amino group and an epoxy group or may be at least one group selected from the group consisting of a hydroxyl group, an isocyanate group and an epoxy group.

Examples of carboxyl group-containing monomers include (meth)acrylic acid, carboxyethyl (meth)acrylate, carboxypentyl (meth)acrylate, itaconic acid, maleic acid, fumaric acid, crotonic acid, and isocrotonic acid.

Examples of hydroxyl group-containing monomers include hydroxyalkyl (meth)acrylates such as 2-hydroxyethyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, and 12-hydroxylauryl (meth)acrylate; and hydroxyalkyl cycloalkane (meth)acrylates such as (4-hydroxymethylcyclohexyl)methyl (meth)acrylate. Examples of hydroxyl group-containing monomers include hydroxyethyl (meth)acrylamide, allyl alcohol, 2-hydroxyethyl vinyl ether, 4-hydroxybutyl vinyl ether, and diethylene glycol monovinyl ether.

Examples of isocyanate group-containing monomers include 2-methacryloyloxyethyl isocyanate, and 2-acryloyloxyethyl isocyanate.

The isocyanate group in the isocyanate group-containing monomer may be blocked (protected) using a blocking agent (protecting group) that can be removed with heat. That is, the isocyanate group-containing monomer may be a monomer having a blocked isocyanate group represented by the following Formula (4).

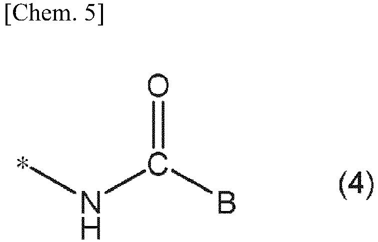

In the formula, B represents a protecting group, and * indicates a bond.

The protecting group in the blocked isocyanate group may be a protecting group that can be removed (deprotected) with heat (for example, heating at 80 to 160°C). In the blocked isocyanate group, a substitution reaction between the blocking agent (protecting group) and the curing agent to be described below may occur under deprotection conditions (for example, a heating condition of 80 to 160°C). Alternatively, in the blocked isocyanate group, an isocyanate group may be generated due to deprotection, and the isocyanate group can also react with the curing agent to be described below.

Examples of blocking agents in the blocked isocyanate group include oxime compounds such as formaldoxime, acetaldoxime, acetoxime, methylethylketoxime, and cyclohexanone oxime; pyrazole compounds such as pyrazole, 3-methylpyrazole, and 3,5-dimethylpyrazole; lactam compounds such as ε-caprolactam, δ-valerolactam, γ-butyrolactam and β-propiolactam; mercaptan compounds such as thiophenol, methylthiophenol, and ethylthiophenol; acid amide compounds such as acetamide and benzamide; and imide compounds such as succinimide and maleic acid imide.

Examples of monomers having a blocked isocyanate group include 2-[(3,5-dimethylpyrazolyl)carbonylamino]ethyl methacrylate, and 2-(0-[1'-methylpropylideneamino]carboxyamino) methacrylate.

Examples of amino group-containing monomers include N,N-dimethylaminoethyl (meth)acrylate, N,N-diethylaminoethyl (meth)acrylate, N,N-dimethylaminopropyl (meth)acrylate, and N,N-diethylaminopropyl (meth)acrylate.

Examples of epoxy group-containing monomers include glycidyl (meth)acrylate, α-ethyl glycidyl (meth)acrylate, α-n-propyl glycidyl (meth)acrylate, α-n-butyl glycidyl (meth)acrylate, 3,4-epoxybutyl (meth)acrylate, 4,5-epoxypentyl (meth)acrylate, 6,7-epoxyheptyl (meth)acrylate, 6,7-epoxyheptyl α-ethyl (meth)acrylate, 3-methyl-3,4-epoxybutyl (meth)acrylate, 4-methyl-4,5-epoxypentyl (meth)acrylate, 5-methyl-5,6-epoxyhexyl (meth)acrylate, β-methylglycidyl (meth)acrylate, and β-methylglycidyl α-ethyl (meth)acrylate.

These second monomers may be used alone or two or more thereof may be used in combination. In order to increase the number of options for the curing agent, the second monomer is preferably an epoxy group-containing monomer having an epoxy group as a reactive group, more preferably a (meth)acrylic monomer containing an epoxy group, still more preferably glycidyl (meth)acrylate, and particularly preferably glycidyl methacrylate.

When the weight average molecular weight (details will be described below) of the acrylic resin is 150,000 or more, in order to further improve heat resistance of the heat storage material, the content of the second monomer is preferably 2 parts by mass or more, more preferably 3 parts by mass or more, still more preferably 4 parts by mass or more, particularly preferably 5 parts by mass or more, and may be 8 parts by mass or more with respect to 100 parts by mass of the monomer components.

When the weight average molecular weight (details will be described below) of the acrylic resin is 100,000 or less, in order to obtain excellent curability of the resin composition, the content of the second monomer is preferably 5 parts by mass or more, more preferably 6 parts by mass or more, still more preferably 7 parts by mass or more, and may be 8 parts by mass or more with respect to 100 parts by mass of the monomer components.

Regardless of the weight average molecular weight (details will be described below) of the acrylic resin, in order to obtain a superior heat storage capacity of the heat storage material, the content of the second monomer may be 2 parts by mass or more, 3 parts by mass or more, 5 parts by mass or more, 7 parts by mass or more, or 8 parts by mass or more, or may be 25 parts by mass or less, and is preferably 20 parts by mass or less, more preferably 15 parts by mass or less, still more preferably 13 parts by mass or less, and particularly preferably 10 parts by mass or less with respect to 100 parts by mass of the monomer components.

The monomer components may further include other monomers as necessary in addition to the first monomer and the second monomer. The other monomers are monomers that are copolymerizable with the first monomer and the second monomer (where the monomers are other than the first monomer and the second monomer). The other monomers include, for example, a group having an ethylenically unsaturated bond (ethylenically unsaturated group) so that they are copolymerizable with the first monomer and the second monomer. The ethylenically unsaturated group is, for example, a (meth)acryloyl group, a vinyl group or an allyl group, and is preferably a (meth)acryloyl group. The other monomers may contain one ethylenically unsaturated group or two or more ethylenically unsaturated groups. When the other monomers contain two or more ethylenically unsaturated groups, a crosslink derived from the other monomer can be formed in the obtained acrylic resin.

Examples of other monomers include alkyl (meth)acrylates having a linear or branched alkyl group having 12 to 30 carbon atoms at the end of an ester group such as dodecyl (meth)acrylate (lauryl (meth)acrylate), tetradecyl (meth)acrylate, hexadecyl (meth)acrylate, octadecyl (meth)acrylate (stearyl (meth)acrylate), docosyl (meth)acrylate (behenyl (meth)acrylate), tetracosyl (meth)acrylate, hexacosyl (meth)acrylate, and octacosyl (meth)acrylate; alkyl (meth)acrylates having an alkyl group having less than 12 carbon atoms (1 to 11 carbon atoms) at the end of an ester group such as methyl (meth)acrylate, ethyl (meth)acrylate, propyl (meth)acrylate, and butyl (meth)acrylate; and cycloalkyl (meth)acrylates having a cyclic hydrocarbon group at the end of an ester group such as isobornyl (meth)acrylate and dicyclopentanyl (meth)acrylate. These other monomers may be used alone or two or more thereof may be used in combination.

In one embodiment, the monomer components include the first monomer and the second monomer, and as necessary, only at least one third monomer selected from the group consisting of an alkyl (meth)acrylate having a linear or branched alkyl group having 1 to 30 carbon atoms at the end of an ester group and a cycloalkyl (meth)acrylate having a cyclic hydrocarbon group at the end of an ester group. In other words, in one embodiment, the monomer components do not include monomers (for example, a (meth)acrylic monomer having a siloxane framework) other than the first monomer, the second monomer and the third monomer. The monomer components may include only the first monomer and the second monomer in one embodiment, and may include only the first monomer, the second monomer, and the third monomer in another embodiment.

The acrylic resin is obtained by polymerizing monomer components including a first monomer, a second monomer, and other monomer used as necessary. The polymerization method can be appropriately selected from among various known polymerization methods such as radical polymerizations, and examples thereof include a suspension polymerization method, a solution polymerization method, and a bulk polymerization method. Regarding the polymerization method, when the weight average molecular weight of the acrylic resin is large (for example, 200,000 or more), a suspension polymerization method is preferably used, and when the weight average molecular weight of the acrylic resin is small (for example, 150,000 or less), a solution polymerization method is preferably used.

When the suspension polymerization method is used, monomer components as a raw material, a polymerization initiator, and a chain transfer agent, water and a suspension agent which are added as necessary are mixed to prepare a dispersion solution.

Examples of suspension agents include a water-soluble polymer such as polyvinyl alcohol, methyl cellulose, and polyacrylamide, and a poorly soluble inorganic substance such as calcium phosphate, and magnesium pyrophosphate. Among these, a water-soluble polymer such as polyvinyl alcohol is preferably used.

The amount of the suspension agent added is preferably 0.005 to 1 parts by mass, and more preferably 0.01 to 0.07 parts by mass with respect to a total amount of 100 parts by mass of the monomer components as a raw material. When the suspension polymerization method is used, a molecular weight adjusting agent such as a mercaptan compound, thioglycol, carbon tetrachloride, and an α-methylstyrene dimer may be additionally added as necessary. The polymerization temperature is preferably 0 to 200°C, and more preferably 40 to 120°C.

When the solution polymerization method is used, examples of solvents used include aromatic solvents such as toluene and xylene, ketone solvents such as methyl ethyl ketone, and methyl isobutyl ketone, ester solvents such as ethyl acetate and butyl acetate, chlorine solvents such as carbon tetrachloride, and alcoholic solvents such as 2-propanol and 2-butanol. In consideration of polymerizability of the obtained acrylic resin, the concentration of the solid content in the solution when solution polymerization starts is preferably 40 to 70 mass%, more preferably 50 to 60 mass%, and may be 20 to 70 mass%, 25 to 65 mass%, or 40 to 60 mass%. The polymerization temperature is preferably 0 to 200°C, more preferably 40 to 120°C, and may be 70 to 90°C.

In each polymerization method, a polymerization initiator may be used. One embodiment of the present invention may be a polymerizable composition including monomer components containing a first monomer and a second monomer, and a polymerization initiator.

The polymerization initiator may be used without particular limitation as long as it is a radical polymerization initiator. Examples of radical polymerization initiators include organic peroxides such as benzoyl peroxide, lauroyl peroxide, di-t-butylperoxyhexahydroterephthalate, t-butylperoxy-2-ethylhexanoate, 1,1-t-butylperoxy-3,3,5-trimethylcyclohexane, and t-butyl peroxyisopropyl carbonate, and azo compounds such as azobisisobutyronitrile, azobis-4-methoxy-2,4-dimethylvaleronitrile, azobiscyclohexanone-1-carbonitrile, and azodibenzoyl.

In order to sufficiently polymerize monomers, the amount of the polymerization initiator added is preferably 0.01 parts by mass or more, more preferably 0.05 parts by mass or more, and still more preferably 0.1 parts by mass or more with respect to a total amount of 100 parts by mass of the monomer components. In order to set the molecular weight of the acrylic resin to be within a suitable range, reduce the amount of decomposition products, and obtain a suitable adhesive strength when used as a heat storage material, the amount of the polymerization initiator added is preferably 10 parts by mass or less, more preferably 5 parts by mass or less, and still more preferably 3 parts by mass or less with respect to a total amount of 100 parts by mass of the monomer components.

The acrylic resin obtained as described above includes a structural unit derived from the first monomer and a structural unit derived from the second monomer. That is, the resin composition according to one embodiment contains an acrylic resin including a first structural unit (a structural unit derived from the first monomer) and a second structural unit (a structural unit derived from the second monomer).

The first structural unit is represented by the following Formula (2).

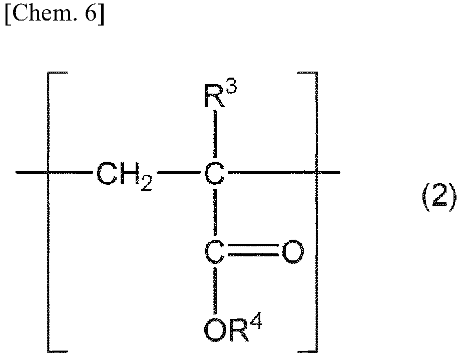

In the formula, R³ represents a hydrogen atom or a methyl group, and R⁴ represents a group having a polyoxyalkylene chain.

The group having a polyoxyalkylene chain represented by R⁴ may be the same group as the group having a polyoxyalkylene chain represented by R² described above.

The content of the first structural unit may be 20 parts by mass or more, 25 parts by mass or more, or 30 parts by mass or more with respect to 100 parts by mass of all structural units constituting the acrylic resin, and in order to obtain a superior heat storage capacity of the heat storage material, the content is preferably 60 parts by mass or more, more preferably 80 parts by mass or more, still more preferably 85 parts by mass or more, and particularly preferably 90 parts by mass or more, and may be, for example, 98 parts by mass or less.

The second structural unit has a reactive group. The reactive group is a group that can react with a curing agent to be described below, and is, for example, at least one group selected from the group consisting of a carboxyl group, a hydroxyl group, an isocyanate group, an amino group and an epoxy group. The second structural unit is, for example, a structural unit derived from the above carboxyl group-containing monomer, hydroxyl group-containing monomer, isocyanate group-containing monomer, amino group-containing monomer or epoxy group-containing monomer. In order to increase the number of options for the curing agent, the second structural unit preferably has an epoxy group as a reactive group, and more preferably has a glycidyl group. The acrylic resin contains one or two or more of these second structural units.

The second structural unit is preferably a structural unit represented by the following Formula (5).

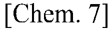

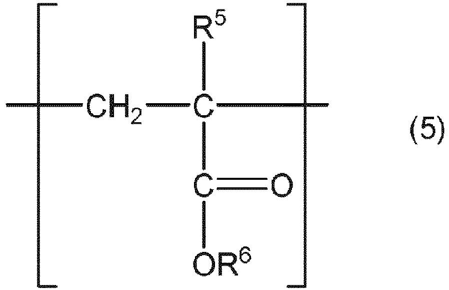

In the formula, R⁵ represents a hydrogen atom or a methyl group, R⁶ represents a hydrogen atom or an organic group having a reactive group. The reactive group in the organic group represented by R⁶ may be the same as the reactive group in the above second monomer, and is preferably an epoxy group and more preferably a glycidyl group.

When the weight average molecular weight (details will be described below) of the acrylic resin is 150,000 or more, in order to further improve heat resistance of the heat storage material, the content of the second structural unit is preferably 2 parts by mass or more, more preferably 3 parts by mass or more, still more preferably 4 parts by mass or more, and particularly preferably 5 parts by mass or more, and may be 8 parts by mass or more with respect to 100 parts by mass of all structural units constituting the acrylic resin.

When the weight average molecular weight (details will be described below) of the acrylic resin is 100,000 or less, in order to obtain excellent curability of the resin composition, the content of the second structural unit is preferably 5 parts by mass or more, more preferably 6 parts by mass or more, still more preferably 7 parts by mass or more, and may be 8 parts by mass or more with respect to 100 parts by mass of all structural units constituting the acrylic resin.

Regardless of the weight average molecular weight (details will be described below) of the acrylic resin, in order to obtain a superior heat storage capacity when the heat storage material is formed, the content of the second structural unit may be 2 parts by mass or more, 3 parts by mass or more, 5 parts by mass or more, 7 parts by mass or more, or 8 parts by mass or more, and may be 25 parts by mass or less, and preferably 20 parts by mass or less, more preferably 15 parts by mass or less, still more preferably 13 parts by mass or less, and particularly preferably 10 parts by mass or less with respect to 100 parts by mass of all structural units constituting the acrylic resin.

The acrylic resin may further include other structural units as necessary in addition to the first structural unit and the second structural unit. The other structural unit may be a structural unit derived from the above other monomer.

In one embodiment, the acrylic resin includes the first structural unit and the second structural unit, and as necessary, only a third structural unit derived from at least one monomer selected from the group consisting of an alkyl (meth)acrylate having a linear or branched alkyl group having 1 to 30 carbon atoms at the end of an ester group and a cycloalkyl (meth)acrylate having a cyclic hydrocarbon group at the end of an ester group. In other words, in one embodiment, the acrylic resin does not include a structural unit (for example, a structural unit derived from a (meth)acrylic monomer having a siloxane framework) other than the first structural unit, the second structural unit and the third structural unit. In one embodiment, the acrylic resin may include only the first structural unit and the second structural unit, and may include only the first structural unit, the second structural unit, and the third structural unit in another embodiment.

The acrylic resin may be any of a random copolymer, a block copolymer and a graft copolymer.

In one embodiment, in order to obtain an excellent strength for the heat storage material, the weight average molecular weight of the acrylic resin is preferably 150,000 or more, more preferably 200,000 or more or 250,000 or more, and still more preferably 300,000 or more. In consideration of ease of handling of the resin composition, the weight average molecular weight of the acrylic resin is preferably 2,000,000 or less, more preferably 1,500,000 or less, and still more preferably 1,000,000 or less.

In another embodiment, in order to reduce the viscosity of the resin composition, the weight average molecular weight of the acrylic resin is preferably 100,000 or less, more preferably 70,000 or less, and still more preferably 40,000 or less. In this case, the weight average molecular weight of the acrylic resin may be, for example 5,000 or more.

In order to obtain a superior heat storage capacity of the heat storage material, the content of the acrylic resin is preferably 30 mass% or more, more preferably 50 mass% or more, still more preferably 70 mass% or more, and particularly preferably 80 mass% or more with respect to a total amount of the resin composition. The content of the acrylic resin may be 100 mass% or less, 99.5 mass% or less or 99.3 mass% or less with respect to a total amount of the resin composition.

In order to further improve the heat storage effect, the resin composition may further contain a capsule containing a heat storage component (hereinafter referred to as a "heat storage capsule").

The capsule containing a heat storage component includes a heat storage component and an outer shell (shell) containing the heat storage component. The heat storage component may be a component that can store heat, and may be, for example, a component having a heat storage ability according to phase transition. Regarding the heat storage component, a component having a phase transition temperature that matches a target temperature is appropriately selected according to the purpose of use. In order to obtain a heat storage effect in a practical range, the heat storage component has, for example, a solid phase/liquid phase transition point (melting point) exhibiting phase transition of a solid phase/liquid phase at -30 to 120°C.

The heat storage component may be, for example, an organic compound such as a chain-like saturated hydrocarbon compound (paraffin hydrocarbon compound), natural wax, petroleum wax, polyethylene glycol, and a sugar alcohol, or an inorganic compound such as an inorganic hydrate compound, and inorganic compounds exhibiting a crystal structure change. The heat storage component is preferably a chain-like saturated hydrocarbon compound (paraffin hydrocarbon compound) because it is inexpensive and has low toxicity and it is possible to easily select one having a desired phase transition temperature. Here, the term "chain" in this specification means a linear or branched chain (branched chain).

Specific examples of chain-like saturated hydrocarbon compounds include n-decane (C10 (number of carbon atoms, the same applies hereinafter), -29°C (transition point (melting point), the same applies hereinafter)), n-undecane (C11, -25°C), n-dodecane (C12, -9°C), n-tridecane (C13, -5°C), n-tetradecane (C14, 6°C), n-pentadecane (C15, 9°C), n-hexadecane (C16, 18°C), n-heptadecane (C17, 21°C), n-octadecane (C18, 28°C), n-nonadecane (C19, 32°C), n-eicosane (C20, 37°C), n-heneicosane (C21, 41°C), n-docosane (C22, 46°C), n-tricosane (C23, 47°C), n-tetracosane (C24, 50°C), n-pentacosane (C25, 54°C), n-hexacosane (C26, 56°C), n-heptacosane (C27, 60°C), n-octacosane (C28, 65°C), n-nonacosane (C29, 66°C), n-triacontane (C30, 67°C), n-tetracontane (C40, 81°C), n-pentacontane (C50, 91°C), n-hexacontane (C60, 98°C), and n-hectane (C100, 115°C). The chain-like saturated hydrocarbon compound may be a branched saturated hydrocarbon compound having the same number of carbon atoms as these linear saturated hydrocarbon compounds, and chain-like saturated hydrocarbon compounds may be of one type or of two or more types.

The outer shell (shell) containing such a heat storage component is preferably formed of a material having a heat resistance temperature sufficiently higher than the transition point (melting point) of the heat storage component. The material forming the outer shell has a heat resistance temperature that is, for example, 30°C or higher, and preferably 50°C or higher, with respect to the transition point (melting point) of the heat storage component. Here, the heat resistance temperature is defined as a temperature at which 1% weight loss occurs when the weight loss of the capsule is measured using a differential thermogravimetric simultaneous measurement device (for example, TG-DTA6300, commercially available from Hitachi High-Tech Science Corporation)).

Regarding the material forming the outer shell, a material having a strength according to the application of the heat storage material formed of the resin composition is appropriately selected. The outer shell is preferably formed of a melamine resin, an acrylic resin, a urethane resin, silica, or the like. Examples of micro capsules having an outer shell made of a melamine resin include BA410xxP, 6C, BA410xxP, 18C, and BA410xxP, 37C (commercially available from Outlast Technology LLC), Thermo Memory FP-16, FP-25, FP-31, and FP-39 (commercially available from Mitsubishi Paper Mills Ltd.) and Riken Resin PMCD-15SP, 25SP, and 32SP (commercially available from Mikiriken Industrial Co., Ltd.). Examples of micro capsules having an outer shell made of an acrylic resin (polymethylmethacrylate resin) include Micronal DS5001X, and 5040X (commercially available from BASF). Examples of micro capsules having an outer shell made of silica include Riken Resin LA-15, LA-25, and LA-32 (commercially available from Mikiriken Industrial Co., Ltd.).

In order to further improve the heat storage effect, the content of the heat storage component is preferably 20 mass% or more, and more preferably 60 mass% or more with respect to a total amount of the heat storage capsule, and in order to inhibit breakage of the capsule due to change in the volume of the heat storage component, the content is preferably 80 mass% or less.

In order to adjust the thermal conductivity of the capsule, a specific gravity, or the like, the heat storage capsule may further contain graphite, a metal powder, an alcohol or the like in the outer shell.

The particle size (average particle size) of the heat storage capsule is preferably 0.1 µm or more, more preferably 0.2 µm or more, and still more preferably 0.5 µm or more, and preferably 100 µm or less, and more preferably 50 µm or less. The particle size (average particle size) of the heat storage capsule is measured using a laser diffraction particle size distribution measurement device (for example, SALD-2300 commercially available from Shimadzu Corporation).

The heat storage capacity of the heat storage capsule (powder state) is preferably 150 J/g or more because in this case a heat storage material having a higher heat storage density can be obtained. The heat storage capacity is measured through differential scanning calorimetry (DSC).

Regarding a method of producing a heat storage capsule, an appropriate method may be selected from among conventionally known production methods such as an interfacial polymerization method, an in-situ polymerization method, an in-liquid curing coating method, and a coacervate method according to the heat storage component, the material of the outer shell, and the like.

In order to further improve the heat storage effect, the content of the heat storage capsule is preferably 40 mass% or more, more preferably 45 mass% or more, and still more preferably 50 mass% or more with respect to a total amount of the resin composition. In order to prevent the heat storage capsule from dropping out of a cured product of the resin composition, the content of the heat storage capsule is preferably 90 mass% or less, more preferably 85 mass% or less, and still more preferably 80 mass% or less with respect to a total amount of the resin composition.

In order to further increase the heat storage capacity, the resin composition may further include polyalkylene glycol. In this case, the polyalkylene glycol may not be contained in the above heat storage capsule (outer shell (shell)).

The polyalkylene glycol may be, for example, polyethylene glycol, polypropylene glycol, or polybutylene glycol, and is preferably polyethylene glycol.

The weight average molecular weight (Mw) of the polyalkylene glycol may be 800 or more, 900 or more, or 1,000 or more, and may be 15,000 or less, 12,000 or less, or 10,000 or less.

The content of the polyalkylene glycol may be 10 parts by mass or more, 20 parts by mass or more, 30 parts by mass or more, 40 parts by mass or more, 50 parts by mass or more, 60 parts by mass or more, 70 parts by mass or more, 80 parts by mass or more, or 90 parts by mass or more, and may be 120 parts by mass or less, 110 parts by mass or less, 100 parts by mass or less, 90 parts by mass or less, 80 parts by mass or less, 70 parts by mass or less, or 60 parts by mass or less with respect to 100 parts by mass of the acrylic resin.

When used for forming a heat storage material, in order to minimize liquid leakage and volatilization of the heat storage material and improve heat resistance, the resin composition may further contain a curing agent. The curing agent is a curing agent that can react with a reactive group contained in the second monomer (second structural unit).

The curing agent may be a thermosetting agent that reacts with a reactive group contained in the second monomer (second structural unit) with heat. When the curing agent is a thermosetting agent, the resin composition may be a resin composition that is cured by heating at preferably 105°C or higher, more preferably 110°C or higher, and still more preferably 115°C or higher, and may be, for example, a resin composition that is cured by heating at 200°C or lower, 190°C or lower, or 180°C or lower. A heating time when the resin composition is heated may be appropriately selected according to the composition of the resin composition so that the resin composition is suitably cured.

Examples of curing agents include an isocyanate curing agent, a phenolic curing agent, an amine curing agent, an imidazole curing agent, an acid anhydride curing agent, and a carboxylic acid curing agent. These curing agents may be used alone or two or more thereof may be used in combination according to the type of the reactive group contained in the second monomer (second structural unit). When the reactive group is an epoxy group, the curing agent is preferably a phenolic curing agent or an imidazole curing agent.

Examples of isocyanate curing agents include aromatic diisocyanates such as tolylene diisocyanate (2,4- or 2,6-tolylene diisocyanate, or mixtures thereof) (TDI), phenylene diisocyanate (m- or p-phenylene diisocyanate, or mixtures thereof), 4,4'-diphenyl diisocyanate, 1,5-naphthalene diisocyanate (NDI), diphenylmethane diisocyanate (4,4'-, 2,4'- or 2,2'-diphenylmethane diisocyanate, or mixtures thereof) (MDI), 4,4'-toluidine diisocyanate (TODI), and 4,4'-diphenyl ether diisocyanate, and xylylene diisocyanate (1,3- or 1,4-xylylene diisocyanate, or mixtures thereof) (XDI),
tetramethyl xylylene diisocyanate (1,3- or 1,4-tetramethyl xylylene diisocyanate, or mixtures thereof) (TMXDI), and ω,ω'-diisocyanate-1,4-diethylbenzene. Examples of isocyanate curing agents include aliphatic diisocyanates such as trimethylene diisocyanate, 1,2-propylene diisocyanate, butylene diisocyanate (tetramethylene diisocyanate, 1, 2-butylene diisocyanate, 2,3-butylene diisocyanate, 1,3-butylene diisocyanate), 1,5-pentamethylene diisocyanate (PDI), 1,6-hexamethylene diisocyanate (HDI), 2,4,4- or 2,2,4-trimethylhexamethylene diisocyanate, and 2,6-diisocyanate methyl caprate, and alicyclic diisocyanates such as 1,3-cyclopentane diisocyanate, 1,3-cyclopentene diisocyanate, cyclohexane diisocyanate (1,4-cyclohexane diisocyanate, 1,3-cyclohexane diisocyanate), 3-isocyanatomethyl-3,5,5-trimethylcyclohexyl isocyanate (isophorone diisocyanate) (IPDI), methylene bis(cyclohexyl isocyanate) (4,4'-, 2,4'- or 2,2'-methylene bis(cyclohexyl isocyanate), their trans, trans-form, trans, cis-form, cis, cis-form, or mixtures thereof) (H12MDI), methyl cyclohexane diisocyanate (methyl-2,4-cyclohexane diisocyanate, methyl-2,6-cyclohexane diisocyanate), norbornane diisocyanate (various isomers or mixtures thereof) (NBDI), and bis(isocyanatomethyl)cyclohexane (1,3- or 1,4-bis(isocyanatomethyl)cyclohexane or mixtures thereof) (H6XDI).

Examples of phenolic curing agents include phenol compounds having bisphenol A, bisphenol F, bisphenol S, 4,4'-biphenylphenol, tetramethyl bisphenol A, dimethylbisphenol A, tetramethyl bisphenol F, dimethyl bisphenol F, tetramethyl bisphenol S, dimethyl bisphenol S, tetramethyl-4,4'-biphenol, dimethyl-4,4' -biphenylphenol,
1-(4-hydroxyphenyl)-2-[4-(1,1-bis-(4-hydroxyphenyl)ethyl)phenyl]propane, 2,2' -methylene-bis(4-methyl-6-tert-butylphenol),
4,4'-butylidene-bis(3-methyl-6-tert-butylphenol), trishydroxyphenylmethane, resorcinol, hydroquinone, pyrogallol, and diisopropylidene frameworks; phenol compounds having a fluorene framework such as 1,1-di-4-hydroxyphenylfluorene; cresol compounds; ethylphenol compounds; butylphenol compounds; octylphenol compounds; and various novolac resins such as novolac resins including various phenols such as bisphenol A, bisphenol F, bisphenol S, and a naphthol compound as raw materials, a phenol novolac resin containing a xylylene framework, a phenol novolac resin containing a dicyclopentadiene framework, a phenol novolac resin containing a biphenyl framework, a phenol novolac resin containing a fluorene framework, and a phenol novolac resin containing a furan framework.

Examples of amine curing agents include aromatic amines such as diaminodiphenylmethane, diaminodiphenyl sulfone, diaminodiphenyl ether, p-phenylenediamine, m-phenylenediamine, o-phenylenediamine, 1,5-diaminonaphthalene, and m-xylylenediamine, and aliphatic amines such as ethylenediamine, diethylenediamine, hexamethylenediamine, isophorone diamine, bis(4-amino-3-methyldicyclohexyl)methane, and polyether diamine; and guanidine compounds such as dicyandiamide, and 1-(o-tolyl)biguanide.

Examples of imidazole curing agents include 2-methylimidazole, 2-ethyl-4-methylimidazole, 2-phenylimidazole, 2-undecylimidazole, 2-heptadecylimidazole, 2-phenyl-4-methylimidazole, 1-benzyl-2-phenylimidazole, 1-benzyl-2-methylimidazole, 1-cyanoethyl-2-methylimidazole,
1-cyanoethyl-2-phenylimidazole, 1-cyanoethyl-2-undecylimidazole, 2,3-dihydro-1H-pyrrolo-[1 ,2-a]benzimidazole,
2,4-diamino-6(2'-methylimidazole(1'))ethyl-s-triazine,
2,4-diamino-6(2'-undecylimidazole(1'))ethyl-s-triazine,
2,4-diamino-6(2'-ethyl-4-methylimidazole(1'))ethyl-s-triazine,
2,4-diamino-6(2'-methylimidazole(1'))ethyl-s-triazine-isocyanuric acid adducts, 2-methylimidazole isocyanuric acid adducts, 2-phenylimidazole isocyanuric acid adducts, 2-phenyl-3,5-dihydroxymethylimidazole, 2-phenyl-4-methyl-5-hydroxymethylimidazole, and 1-cyanoethyl-2-phenyl-3,5-dicyanoethoxymethylimidazole.

Examples of acid anhydride curing agents include aromatic carboxylic anhydrides such as phthalic anhydride, trimellitic anhydride, pyromellitic anhydride, benzophenone tetracarboxylic acid anhydride, ethylene glycol trimellitic anhydride, and biphenyl tetracarboxylic acid anhydride; anhydrides of aliphatic carboxylic acids such as azelaic acid, sebacic acid, and dodecanedioic acid, and alicyclic carboxylic acid anhydrides such as tetrahydrophthalic anhydride, hexahydrophthalic anhydride, nadic anhydride, HET anhydride, and himic anhydride.

Examples of carboxylic acid curing agents include succinic acid, glutaric acid, adipic acid, sebacic acid, phthalic acid, isophthalic acid, and terephthalic acid.

The content of the curing agent is preferably 0.01 mass% or more, and preferably 10 mass% or less, more preferably 5 mass% or less, and still more preferably 1 mass% or less with respect to a total amount of the resin composition.

The resin composition may further contain a liquid medium. The liquid medium is not particularly limited as long as it is a solvent in which components are dissolved or a dispersion medium in which components are dispersed, and may be, for example, a liquid medium composed of an organic compound. Examples of liquid mediums include ethyl lactate, propylene glycol monomethyl ether acetate, ethyl acetate, butyl acetate, ethoxyethyl propionate, 3-methyl methoxy propionate, N,N-dimethylformamide, methyl ethyl ketone, cyclopentanone, cyclohexanone, propylene glycol monomethyl ether, toluene, and xylene. These liquid mediums may be used alone or two or more thereof may be used in combination.

When the resin composition includes a liquid medium, the content of the liquid medium is preferably 5 mass% or more, more preferably 10 mass% or more, and preferably 80 mass% or less, and more preferably 70 mass% or less with respect to a total amount of the resin composition.

In order to improve adhesiveness at an interface between the heat storage capsule and the acrylic resin, the resin composition preferably further contains a surface treatment agent. The surface treatment agent may be, for example, a coupling agent. Examples of coupling agents include an aminosilane coupling agent, an epoxysilane coupling agent, a phenylsilane coupling agent, an alkylsilane coupling agent, an alkenylsilane coupling agent, an alkynylsilane coupling agent, a haloalkylsilane coupling agent, a siloxane coupling agent, a hydrosilane coupling agent, a silazane coupling agent, an alkoxysilane coupling agent, a chlorosilane coupling agent, a (meth)acrylsilane coupling agent, an aminosilane coupling agent, an isocyanurate silane coupling agent, a ureidosilane coupling agent, a mercaptosilane coupling agent, a sulfide silane coupling agent, and an isocyanate silane coupling agent. In consideration of the reactivity with a resin, the coupling agent is preferably an aminosilane coupling agent.

The content of the surface treatment agent may be 0.01 mass% or more, 0.02 mass% or more, or 0.05 mass% or more, and may be 10 mass% or less, 5 mass% or less, or 2 mass% or less with respect to a total amount of the resin composition.

In order to accelerate the reaction between the acrylic resin and the curing agent, the resin composition preferably further contains a curing accelerating agent. Examples of curing accelerating agents include an organic phosphorus curing accelerating agent, a quaternary ammonium salt-based curing accelerating agent, and a tin catalyst. These curing accelerating agents may be used alone or two or more thereof may be used in combination.

The content of the curing accelerating agent is preferably 0.005 mass% or more, more preferably 0.01 mass% or more, and still more preferably 0.02 mass% or more, and preferably 1 mass% or less, more preferably 0.5 mass% or less, and still more preferably 0.2 mass% or less with respect to a total amount of the resin composition.

The resin composition may further contain other additives as necessary. Examples of other additives include an antioxidant, a colorant, a filler, a crystal nucleating agent, a heat stabilizer, a thermal conductive material, a plasticizer, a foaming agent, a flame retardant, a damping agent, a dehydrating agent, and a flame retardant aid (for example, a metal oxide). These other additives may be used alone or two or more thereof may be used in combination. The content of other additives may be 0.1 mass% or more and may be 30 mass% or less with respect to a total amount of the resin composition.

The resin composition may be a solid or liquid at 50°C, 80°C, or 90°C, and can be easily filled into a member having a complicated shape, and in order to extend a heat storage material application range, the resin composition is preferably a liquid at 50°C, 80°C or 90°C.

In order to obtain excellent flowability and handling properties, the viscosity of the resin composition at 80°C is preferably 100 Pa·s or less, more preferably 50 Pa·s or less, still more preferably 40 Pa·s or less, and may be 20 Pa·s or less or 10 Pa·s or less. For the same reason, at the melting point of +20°C of the acrylic resin, the resin composition has a viscosity that is preferably 100 Pa·s or less, more preferably 50 Pa·s or less, and still more preferably 40 Pa·s or less. The viscosity of the resin composition at 80°C or the viscosity of the acrylic resin at a melting point of +20°C may be, for example, 0.5 Pa·s or more.

The viscosity of the resin composition means a value measured based on JIS Z 8803, and specifically, a value measured by an E type viscometer (PE-80L commercially available from Toki Sangyo Co., Ltd.). Here, the viscometer can be calibrated based on JIS Z 8809-JS14000. In addition, the melting point of the acrylic resin means a value measured by the method described in examples.

The resin composition described above is a curable composition that can be cured (for example, thermoset). The resin composition is suitably used as a heat storage material by curing the resin composition (suitable as a composition for a heat storage material). That is, the heat storage material according to one embodiment includes a cured product of the above resin composition.

In the heat storage material, since a cured product of the acrylic resin functions as a component having a heat storage ability, an excellent heat storage capacity is obtained even if the heat storage material (resin composition) does not contain a heat storage capsule. In addition, when the heat storage material (resin composition) further contains a heat storage capsule, a superior heat storage capacity is obtained.

The heat storage material can be used in various fields. The heat storage material is used for, for example, air conditioning devices (for improving efficiency of air conditioning devices) in automobiles, buildings, public facilities, underground malls, and the like, pipes (for heat storage of pipes) in factories and the like, engines (for heat retention around the engine) in automobiles, electronic components (for preventing increasing of the temperature of electronic components), fibers for undergarments, and the like.

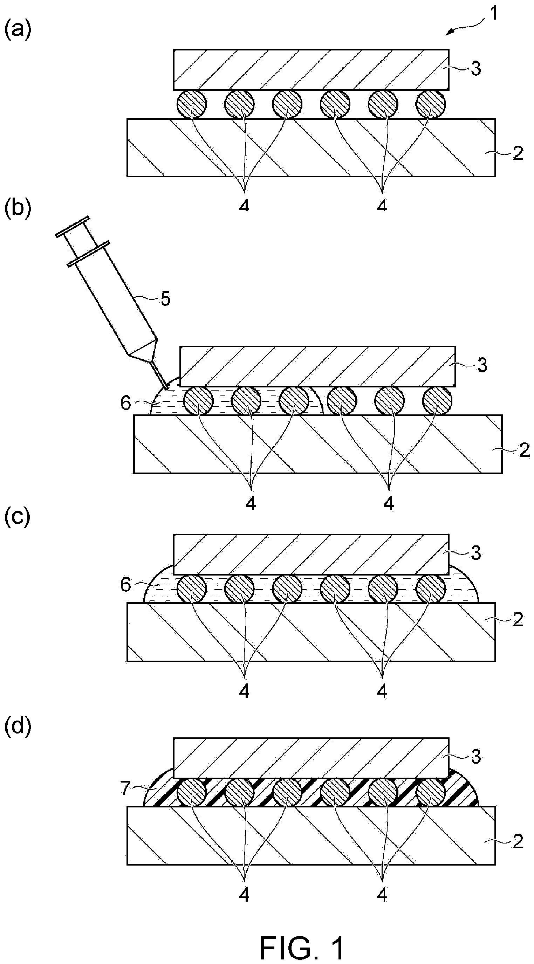

Next, regarding a method of obtaining an article including a heat storage material, an electronic component as an object in which the heat storage material is provided will be described as an example. Fig. 1 shows schematic cross-sectional views explaining a method of forming a heat storage material according to one embodiment (a method of producing an article including a heat storage material). In the forming method (production method) according to the present embodiment, first, as shown in Fig. 1(a), an electronic component 1 is prepared as an article as an object in which the heat storage material is provided. The electronic component 1 includes, for example, a substrate (for example, a circuit substrate) 2, a semiconductor chip (heat source) 3 provided on the substrate 2, and a plurality of connecting parts (for example, solders) 4 that connect the semiconductor chip 3 to the substrate 2. In the electronic component 1, the semiconductor chip 3 serves as a heat source. The plurality of connecting parts 4 are provided between the substrate 2 and the semiconductor chip 3 so that they are separated from each other. That is, there are gaps between the substrate 2 and the semiconductor chip 3 so that the plurality of connecting parts 4 are separated from each other.

Next, as shown in Fig. 1(b), for example, a liquid resin composition 6 is filled between the substrate 2 and the semiconductor chip 3 using a syringe 5. The resin composition 6 may be the above resin composition according to one embodiment. The resin composition 6 may be in a completely uncured state or in a partially cured state.

When the resin composition 6 is in a liquid state at room temperature (for example, 25°C), the resin composition 6 can be filled at room temperature. When the resin composition 6 has a solid form at room temperature, the resin composition 6 can be heated (for example, 90°C or higher) and changed to a liquid state, and then filled.

When the resin composition 6 is filled as described above, as shown in Fig. 1(c), the resin composition 6 is disposed in the above gap between the substrate 2 and the semiconductor chip 3 so that it is in thermal contact with the substrate 2, the semiconductor chip 3 and the connecting part 4.

When the resin composition 6 contains a liquid medium, the liquid medium may be volatilized by drying the resin composition 6. A drying method is not particularly limited, and examples thereof include a heat treatment method using a device such as a hot plate and an oven, and a natural drying method. Conditions in which drying is performed by a heat treatment are not particularly limited as long as a liquid medium in the resin composition is sufficiently volatilized, and are generally, conditions of 50°C to 150°C for about 1 minute to 90 minutes.

Next, for example, the resin composition 6 is cured by heating, and as shown in Fig. 1(d), a heat storage material 7 is formed in the above gap between the substrate 2 and the semiconductor chip 3.

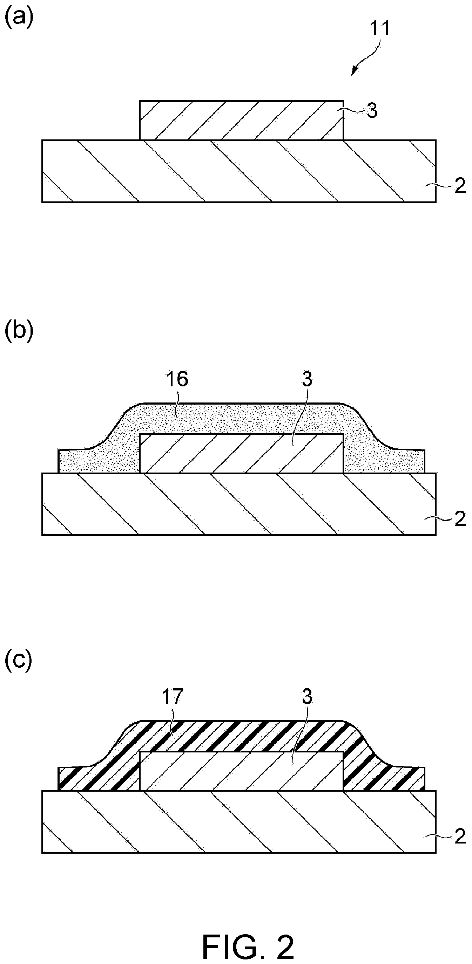

In the above embodiment, the resin composition 6 has a liquid form. However, in another embodiment, the resin composition may have a sheet form. Fig. 2 shows schematic cross-sectional view explaining a method of forming a heat storage material according to another embodiment. In the method of forming a heat storage material (production method) according to the present embodiment, first, as shown in Fig. 2(a), an electronic component 11 is prepared as an article as an object in which the heat storage material is provided. The electronic component 11 includes, for example, the substrate 2 and the semiconductor chip (heat source) 3 provided on the substrate 2.

Next, as shown in Fig. 2(b), a sheet-like (or film-like) resin composition 16 is disposed on the substrate 2 and the semiconductor chip 3 so that it is in thermal contact with the substrate 2 and the semiconductor chip 3. The resin composition 16 is, for example, a composition that is converted into the B stage (semi-cured) according to the above curing method. That is, the method of forming a heat storage material according to the present embodiment may include a process of converting a first resin composition into a B stage to prepare a second resin composition (the sheet-like resin composition 16).

When the resin composition 16 has a solid form at room temperature, the resin composition 16 may be heated and melted and molded into a sheet form. Molding may be performed by injection molding, compression molding or transfer molding. In this case, it is not necessary to provide a casing for the resin composition 16, and the resin composition 16 alone can be attached to an adherence object, wound, or attached in various states.

Next, for example, when the resin composition 16 is cured by heating, as shown in Fig. 2(c), a heat storage material 17 is formed on the substrate 2 and the semiconductor chip 3.

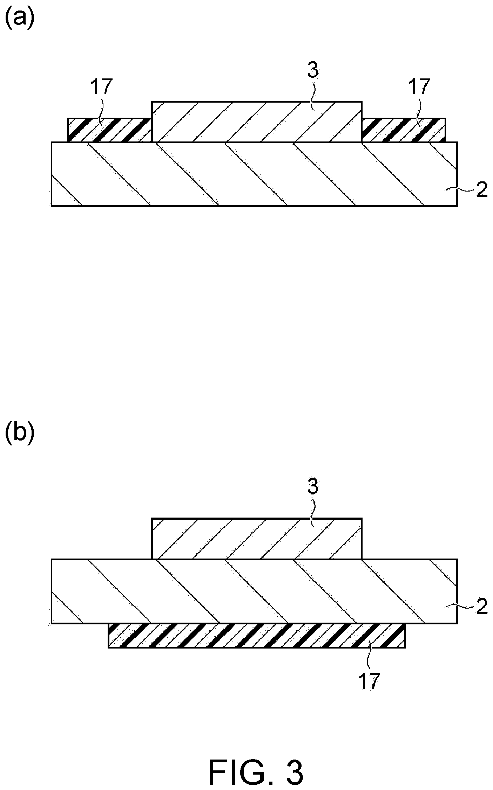

In the above embodiment, the heat storage material is formed so that it covers the entire exposed surface of the heat source, but in another embodiment, the heat storage material may be disposed so that it covers a part of the exposed surface of the heat source. Fig. 3(a) is a schematic cross-sectional view showing an article in which a heat storage material is formed according to another embodiment. As shown in Fig. 3(a), for example, the heat storage material 17 may be disposed so that it is in contact with a part (covers a part) of the exposed surface of the semiconductor chip (heat source) 3. While a part in which the heat storage material 17 is disposed (a part of the heat storage material 17 in contact with the semiconductor chip 3) is a side part of the semiconductor chip 3 in Fig. 3(a), the part may be on any surface of the semiconductor chip 3.

In the embodiments described above, the resin compositions 6 and 16 for forming the heat storage materials 7 and 17 in an uncured or semi-cured state are disposed so that they are in contact with the semiconductor chip 3 as a heat source, and the resin compositions 6 and 16 are then cured. Therefore, the heat storage materials 7 and 17 are suitably formed to conform to the shape of the semiconductor chip 3. Therefore, heat generated in the semiconductor chip 3 as a heat source and heat conducted from the semiconductor chip 3 to the substrate 2 are also efficiently conducted to the heat storage materials 7 and 17, and suitably stored in the heat storage materials 7 and 17.

In the above embodiments, the resin compositions 6 and 16 are disposed so that they are in direct contact with the semiconductor chip 3 as a heat source, and the heat storage materials 7 and 17 are formed. However, the resin composition and the heat storage material simply need to be in thermal contact with the heat source. In another embodiment, for example, the resin composition may be disposed so that it is in thermal contact with the heat source with a thermally conductive member (such as a heat dissipation member) therebetween to form the heat storage material.

Fig. 3(b) is a schematic cross-sectional view showing an article in which a heat storage material is formed according to another embodiment. As shown in Fig. 3(b), the heat storage material 17 is disposed on the surface opposite to the surface of the substrate 2 on which the semiconductor chip 3 is provided. In the present embodiment, the heat storage material 17 is not in direct contact with the semiconductor chip 3, but is in thermal contact with the semiconductor chip 3 with the substrate 2 therebetween. A part in which the heat storage material 17 is disposed may be any surface of the substrate 2 as long as it is in thermal contact with the semiconductor chip 3. In this case, heat generated in the heat source (the semiconductor chip 3) is efficiently conducted to the heat storage material 17 with the substrate 2 therebetween, and suitably stored in the heat storage material 17.

In the embodiments described with reference to Fig. 2 to Fig. 3, the heat storage material 17 is formed using the sheet-like resin composition 16 as a resin composition. However, in modified example of the embodiments, the resin composition may be a liquid resin composition. In this case, for example, a liquid resin composition may be applied to a part or all of the exposed surface of the semiconductor chip (heat source) 3 or the surface opposite to the surface of the substrate 2 on which the semiconductor chip 3 is provided, and cured to form the heat storage material.

When the resin composition contains a liquid medium, for example, the sheet-like resin composition 16 may be obtained by applying a resin composition containing a liquid medium to a base film using various coating devices, and performing drying under desired conditions.

### [Examples]

While the present invention will be described below in more detail with reference to examples, the present invention is not limited to the following examples.

### [Synthesis of acrylic resin]

Acrylic resins 1A to 1K used in Examples 1-1 to 1-21 were synthesized by a known suspension polymerization method as follows.

### (Synthesis Example of acrylic resin 1A)

A 500 mL flask including a stirrer, a thermometer, a nitrogen gas introduction pipe, a discharge pipe and a heating jacket was used as a reactor, and nitrogen was caused to flow in the flask.

Next, 95 g of methoxy polypropylene glycol#400 acrylate and 5 g of glycidyl methacrylate as monomers were mixed, and lauroyl peroxide, and 0.12 g of n-octyl mercaptan were additionally added, and dissolved to obtain a mixture. Then, water and polyvinyl alcohol (PVA) were added to the mixture to prepare a dispersion solution.

Then, the dispersion solution was supplied into a flask (reactor) flushed with nitrogen, heated at a temperature of 60°C in the reactor with stirring, and reacted for 4 hours. A polymerization rate was calculated from a specific gravity of the resin produced while sampling during the reaction, and after it was confirmed that the polymerization rate was 80% or more, and the temperature was raised to 90°C, and the reaction was additionally continued for 2 hours. Then, a product in the reactor was cooled, the product was taken out, washed with water, dehydrated, and dried to obtain an acrylic resin 1A. The weight average molecular weight (Mw) of the acrylic resin 1A was 600,000.

Acrylic resins 1B to 1K were synthesized in the same method as in the synthesis example of the acrylic resin 1A except that the monomer components were changed to monomer components shown in Tables 1 and 2. An acrylic resin 1K was synthesized in the same method as in the synthesis example of the acrylic resin 1A except that the monomer components were changed to monomer components shown in Tables 1 and 2, and the amount of n-octyl mercaptan in the synthesis example of the acrylic resin 1A was changed to 0.4 g. The weight average molecular weights (Mw) of the obtained acrylic resins are also shown in Tables 1 and 2.

**[Table 1]**

| | | Acrylic resin | | | | | |
|---|---|---|---|---|---|---|---|
| | | 1A | 1B | 1C | ID | IE | IF |
| Monomer components (parts by mass) | Methoxy polyethylene glycol #1000 methacrylate (n=23) | - | - | 95 | - | 75 | 45 |
| | Methoxy polyethylene glycol #1000 acrylate (n=23) | - | - | - | - | - | - |
| | Methoxy polyethylene glycol #600 acrylate (n=13) | - | 95 | - | - | - | - |
| | Methoxy polyethylene glycol #400 acrylate (n=9) | 95 | - | - | 90 | - | 45 |
| | Stearyl acrylate | - | - | - | - | - | - |
| | Glycidyl methacrylate | 5 | 5 | 5 | 10 | 10 | 10 |
| | 4-Hydroxybutyl acrylate | - | - | - | - | - | - |
| | Butyl acrylate | - | - | - | - | 15 | - |
| Weight average molecular weight (Mw) | | 600,000 | 650,000 | 700,000 | 650,000 | 700,000 | 550,000 |

**[Table 2]**

| | | Acrylic resin | | | | |
|---|---|---|---|---|---|---|
| | | 1G | 1H | 1I | 1J | 1K |
| Monomer components (parts by mass) | Methoxy polyethylene glycol #1000 methacrylate (n=23) | - | 30 | - | - | - |
| | Methoxy polyethylene glycol #1000 acrylate (n=23) | - | - | 95 | 90 | 95 |
| | Methoxy polyethylene glycol #600 acrylate (n=13) | - | - | - | - | - |
| | Methoxy polyethylene glycol #400 acrylate (n=9) | 80 | - | - | - | - |
| | Stearyl acrylate | - | 60 | - | - | - |
| | Glycidyl methacrylate | - | 10 | 5 | 5 | 5 |
| | 4-Hydroxybutyl acrylate | 10 | - | - | - | - |
| | Butyl acrylate | 10 | - | - | 5 | - |
| Weight average molecular weight (Mw) | | 600,000 | 700,000 | 600,000 | 650,000 | 300,000 |

### [Synthesis of acrylic resin]

Acrylic resins 2A to 2L used in Examples 2-1 to 2-20 were synthesized according to a known solution polymerization method as follows.

### (Synthesis Example of acrylic resin 2A)

A 500 mL flask including a stirrer, a thermometer, a nitrogen gas introduction pipe, a discharge pipe and a heating jacket was used as a reactor, and 95 g of methoxy polypropylene glycol#400 acrylate and 5 g of glycidyl methacrylate as monomers, and 81.8 g of methyl ethyl ketone were mixed, and added to the reactor, and the mixture was stirred at room temperature (25°C), and nitrogen was caused to flow for 1 hour. Then, the temperature was raised to 70°C, and after heating was completed, a solution in which 0.28 g of azobisisobutyronitrile was dissolved in methyl ethyl ketone was added to the reactor, and the reaction was started. Then, the mixture was stirred at a temperature of 70°C in the reactor and the reaction continued for 5 hours. Then, a solution in which 0.05 g of azobisisobutyronitrile was dissolved in methyl ethyl ketone was added to the reactor, the temperature was raised to 80°C, and additionally the reaction continued for 2 hours. Then, the solvent was removed and dried to obtain an acrylic resin 2A. The weight average molecular weight (Mw) of the acrylic resin 2A was 25,000.

Acrylic resins 2B to 2L were synthesized in the same method as in the synthesis example of the acrylic resin 2A except that the monomer components were changed to monomer components shown in Tables 3 and 4. The weight average molecular weight (Mw) and the melting point of the obtained acrylic resins are also shown in Tables 3 and 4.

The melting point of the acrylic resin was measured as follows.

Using a differential scanning calorimeter (model number DSC8500, commercially available from PerkinElmer Co., Ltd.), the temperature was raised to 100°C at 20°C/min, and the temperature was kept at 100°C for 3 minutes, and the temperature was then lowered to -30°C at a rate of 10°C/min, and next, the temperature was kept at -30°C for 3 minutes, and the temperature was then raised to 100°C again at a rate of 10°C/min, and thus thermal behavior of the acrylic resin was measured, and the melting peak was calculated as a melting point of the acrylic resin.

**[Table 3]**

| | | Acrylic resin | | | | | |
|---|---|---|---|---|---|---|---|
| | | 2A | 2A | 2C | 2D | 2E | 2F |
| Monomer components (parts by mass) | Methoxy polyethylene glycol #1000 methacrylate (n=23) | - | - | 95 | - | 75 | 45 |
| | Methoxy polyethylene glycol #1000 acrylate (n=23) | - | - | - | - | - | - |
| | Methoxy polyethylene glycol #600 acrylate (n=13) | - | 95 | - | - | - | - |
| | Methoxy polyethylene glycol #400 acrylate (n=9) | 95 | - | - | 90 | - | 45 |
| | Stearyl acrylate | - | - | - | - | - | - |
| | Glycidyl methacrylate | 5 | 5 | 5 | 10 | 10 | 10 |
| | 4-Hydroxybutyl acrylate | - | - | - | - | - | - |
| | 2-Isocyanatoethyl methacrylate | - | - | - | - | - | - |
| | Butyl acrylate | - | - | - | - | 15 | - |
| Weight average molecular weight (Mw) | | 25,000 | 22,000 | 31,000 | 21,000 | 35,000 | 25,000 |
| Melting point (°C) | | 5 | 15 | 32 | 3 | 25 | 20 |

**[Table 4]**

| | | Acrylic resin | | | | | |
|---|---|---|---|---|---|---|---|
| | | 2G | 2H | 21 | 2J | 2K | 2L |
| Monomer components (parts by mass) | Methoxy polyethylene glycol #1000 methacrylate (n=23) | - | 30 | - | - | - | - |
| | Methoxy polyethylene glycol #1000 acrylate (n=23) | - | - | 93 | - | - | 93 |
| | Methoxy polyethylene glycol #600 acrylate (n=13) | - | - | - | 93 | - | - |
| | Methoxy polyethylene glycol #400 acrylate (n=9) | 80 | - | - | - | 93 | - |
| | Stearyl acrylate | - | 60 | - | - | - | - |
| | Glycidyl methacrylate | - | 10 | 7 | 7 | 7 | - |
| | 4-Hydroxybutyl acrylate | 10 | - | - | - | - | - |
| | 2-Isocyanatoethyl methacrylate | - | - | - | - | - | 7 |
| | Butyl acrylate | 10 | - | - | - | - | - |
| Weight average molecular weight (Mw) | | 21,000 | 31,000 | 25,000 | 22,000 | 31,000 | 21,000 |
| Melting point (°C) | | 0 | 35 | 38 | 15 | 5 | 39 |

Here, n in Tables 1 to 4 corresponds to n in Formula (3).

### [Production of heat storage material]

### (Example 1-1)

98 g of the acrylic resin 1A, 1.5 g of 3 or 4-methyl-hexahydrophthalic anhydride as a curing agent and 0.5 g (solid content ratio) of 1-cyanoethyl-2-phenylimidazole were mixed and kneaded at 100°C for 30 minutes to obtain a resin composition. Next, the resin composition was filled into a 10 cm×10 cm×1 mm mold (SUS plate), an upper lid was covered with the SUS plate, and curing was then performed under a pressure of 60 kPa and at 180°C for 1.5 hours to obtain a sheet-like heat storage material having a thickness of 1 mm.

### (Examples 1-2 to 1-12)

Heat storage materials were produced in the same method as in Example 1-1 except that the composition of the resin composition was changed as shown in Tables 5 and 6.

### (Examples 1 to 13)

39.2 g of the acrylic resin 1I, 0.6 g of 3-methyl-hexahydrophthalic anhydride as a curing agent, 0.2 g (solid content ratio) of 2-ethyl-4-methylimidazole, and 60 g of BA410xxP, C37 (commercially available from Outlast Technology LLC) as a heat storage capsule were mixed and kneaded at 60°C for 30 minutes to obtain a resin composition. Next, the resin composition was filled into a 10 cm×10 cm×1 mm mold (SUS plate), an upper lid was covered with the SUS plate, and curing was then performed under a pressure of 60 kPa and at 120°C for 1 hour to obtain a sheet-like heat storage material having a thickness of 1 mm.

### (Examples 1-14 to 1-21)

Heat storage materials were produced in the same method as in Example 1-13 except that the composition of the resin composition was changed as shown in Tables 7 and 8. The results are shown in Tables 7 and 8.

### (Example 2-1)

9.8 g of the acrylic resin 2A and 0.2 g (solid content ratio) of 1-cyanoethyl-2-phenylimidazole as a curing agent were mixed to obtain a resin composition. The viscosity of the resin composition at 80°C was measured using an E type viscometer (PE-80L commercially available from Toki Sangyo Co., Ltd.) based on JIS Z 8803. The results are shown in Table 9.

Next, the resin composition was filled into a 10 cm×10 cm×1 mm mold (SUS plate), an upper lid was covered with the SUS plate, and curing was then performed under a pressure of 60 kPa and at 180°C for 1.5 hours to obtain a sheet-like heat storage material having a thickness of 1 mm.

### (Examples 2-2 to 2-12)

The viscosity of the resin composition was measured and the heat storage material was produced in the same methods as in Example 2-1 except that the composition of the resin composition was changed as shown in Tables 9 to 11. The results are shown in Tables 9 to 11.

### (Example 2-13)

49.6 g of the acrylic resin 21, 0.4 g (solid content ratio) of 2-ethyl-4-methylimidazole as a curing agent, and 50 g of BA410xxP, C28 (commercially available from Outlast Technology LLC) as a heat storage capsule were mixed to obtain a resin composition. The viscosity of the resin composition at 80°C was measured using an E type viscometer (PE-80L commercially available from Toki Sangyo Co., Ltd.) based on JIS Z 8803. The results are shown in Table 12.

Next, the resin composition was filled into a 10 cm×10 cm×1 mm mold (SUS plate), an upper lid was covered with the SUS plate, and curing was then performed under a pressure of 60 kPa and at 120°C for 1 hour to obtain a sheet-like heat storage material having a thickness of 1 mm.

### (Examples 2-14 to 2-20)

The viscosity of the resin composition was measured and the heat storage material was produced in the same methods as in Example 2-13 except that the composition of the resin composition was changed as shown in Tables 12 and 13. The results are shown in Tables 12 and 13.

### [Evaluation of melting point and heat storage capacity]

The heat storage materials produced in the examples were measured using a differential scanning calorimeter (model number DSC8500, commercially available from PerkinElmer Co., Ltd.), and the melting point and the heat storage capacity were calculated. Specifically, the temperature was raised to 100°C at 20°C/min, and the temperature was kept at 100°C for 3 minutes, and the temperature was then lowered to -30°C at a rate of 10°C/min, and next, the temperature was kept at -30°C for 3 minutes, and the temperature was then raised to 100°C again at a rate of 10°C/min, and thus thermal behavior was measured. The melting peak was used as a melting point of the heat storage material, and the area was used as the heat storage capacity. The results are shown in Tables 5 to 13. Here, when the heat storage capacity was 30 J/g or more, it can be said that the heat storage capacity was excellent and the heat storage was favorable.

### [Evaluation of liquid leakage and volatility]

The heat storage materials produced in the examples were left at a temperature of 80°C under an air atmosphere for 1,000 hours, and the change in weight before and after being left was measured, and a weight loss rate (%) was measured. The results are shown in Tables 5 to 13.

### [Heat resistance test (TG-DTA)]

The weight loss of the heat storage materials produced in the examples was measured using a thermogravimetry TG-DTA6300 (commercially available from Hitachi High-Tech Science Corporation). A temperature (°C) at which the weight decreased 1% from the initial weight was read, and used as a 1% weight loss temperature value. The results are shown in Tables 5 to 13.

**[Table 5]**

| | | | Example 1-1 | Example 1-2 | Example 1-3 | Example 1-4 | Example 1-5 | Example 1-6 |
|---|---|---|---|---|---|---|---|---|
| Composition (parts by mass) | Acrylic resin | 1A | 98.0 | 98.0 | 98.5 | 98.0 | 99.3 | - |
| | | 1B | - | - | - | - | - | 99.3 |
| | | 1C | - | - | - | - | - | - |
| | | ID | - | - | - | - | - | - |
| | | IE | - | - | - | - | - | - |
| | | IF | - | - | - | - | - | - |
| | | 1G | - | - | - | - | - | - |
| | | 1H | - | - | - | - | - | - |
| | Curing agent | A | 1.5 | - | - | - | - | - |
| | | B | - | 1.5 | - | - | - | - |
| | | C | - | - | 1.5 | - | - | - |
| | | D | - | - | - | 1.5 | - | - |
| | | E | 0.5 | 0.5 | - | 0.5 | 0.7 | 0.7 |
| Melting point (°C) | | | -5 | -3 | -2 | -2 | -2 | 15 |
| Heat storage capacity (J/g) | | | 35 | 35 | 37 | 35 | 40 | 50 |
| Liquid leakage and volatility (%) | | | <1 | <1 | <1 | <1 | <1 | <1 |
| Heat resistance (°C) | | | 260 | 260 | 260 | 265 | 270 | 270 |

**[Table 6]**

| | | | Example 1-7 | Example 1-8 | Example 1-9 | Example 1-10 | Example 1-11 | Example 1-12 |
|---|---|---|---|---|---|---|---|---|
| Composition (parts by mass) | Acrylic resin | 1A | - | - | - | - | - | - |
| | | 1B | - | - | - | - | - | - |
| | | 1C | 99.3 | - | - | - | - | - |
| | | ID | - | 99.3 | - | - | - | - |
| | | IE | - | - | 99.3 | - | - | - |
| | | IF | - | - | - | 99.3 | - | - |
| | | 1G | - | - | - | - | 99.3 | - |
| | | 1H | - | - | - | - | - | 99.3 |
| | Curing agent | A | - | - | - | - | - | - |
| | | B | - | - | - | - | - | - |
| | | C | - | - | - | - | - | - |
| | | D | - | - | - | - | - | - |
| | | E | 0.7 | 0.7 | 0.7 | 0.7 | 0.7 | 0.7 |
| Melting point (°C) | | | 28 | -5 | 20 | 12 | -5 | 42 |
| Heat storage capacity (J/g) | | | 97 | 35 | 75 | 50 | 40 | 60 |
| Liquid leakage and volatility (%) | | | <1 | <1 | <1 | <1 | <1 | <1 |
| Heat resistance (°C) | | | 260 | 260 | 265 | 270 | 260 | 320 |

**[Table 7]**

| | | | Example 1-13 | Example 1-14 | Example 1-15 | Example 1-16 | Example 1-17 | Example 1-18 |
|---|---|---|---|---|---|---|---|---|
| Composition (parts by mass) | Acrylic resin | 1I | 39.2 | 39.2 | 39.2 | 39.2 | 39.7 | - |
| | | 1B | - | - | - | - | - | 39.7 |
| | | 1J | - | - | - | - | - | - |
| | | 1K | - | - | - | - | - | - |
| | Curing agent | A | 0.6 | - | - | - | - | - |
| | | B | - | 0.6 | - | - | - | - |
| | | C | - | | 0.8 | - | - | - |
| | | D | - | - | - | 0.6 | - | - |
| | | E | 0.2 | 0.2 | - | 0.2 | 0.3 | 0.3 |
| | Heat storage capsule | MC-6 | - | - | - | - | - | - |
| | | MC32 | - | - | - | - | - | 60 |
| | | MC37 | 60 | 60 | 60 | 60 | 60 | - |
| Melting point (°C) | | | 38 | 37 | 38 | 38 | 38 | 18 |
| Heat storage capacity (J/g) | | | 158 | 157 | 155 | 158 | 160 | 110 |
| Liquid leakage and volatility (%) | | | <1 | <1 | <1 | <1 | <1 | <1 |
| Heat resistance (°C) | | | 230 | 230 | 232 | 235 | 230 | 230 |

**[Table 8]**

| | | | Example 1-19 | Example 1-20 | Example 1-21 |
|---|---|---|---|---|---|
| Composition (parts by mass) | Acrylic resin | 1I | - | - | - |
| | | 1B | - | - | - |
| | | 1A | 39.7 | | |
| | | 1J | | 39.7 | - |
| | | 1K | - | - | 39.7 |
| | Curing agent | A | - | - | - |
| | | B | - | - | - |
| | | C | - | - | - |
| | | D | - | - | - |
| | | E | 0.3 | 0.3 | 0.3 |
| | Heat storage capsule | MC-6 | - | 60 | - |
| | | MC32 | 60 | - | - |
| | | MC37 | - | - | 60 |
| Melting point (°C) | | | 6 | 38 | 38 |
| Heat storage capacity (J/g) | | | 110 | 145 | 158 |
| Liquid leakage and volatility (%) | | | <1 | <1 | <1 |
| Heat resistance (°C) | | | 225 | 245 | 230 |

**[Table 9]**

| | | | | Example 2-1 | Example 2-2 | Example 2-3 | Example 2-4 | Example 2-5 |
|---|---|---|---|---|---|---|---|---|
| Resin composition | Composition (parts by mass) | Acrylic resin | 2A | 98.0 | 98.0 | 98.5 | 98.0 | 98.0 |
| | | Curing agent | A | 2.0 | 0.5 | - | 0.5 | 0.5 |
| | | | B | - | 1.5 | - | - | - |
| | | | C | - | - | 1.5 | - | - |
| | | | D | - | - | - | 1.5 | - |
| | | | E | - | - | - | - | 1.5 |
| | Viscosity (Pa·s) | | | 3.7 | 3.7 | 3.9 | 3.9 | 3.7 |
| Heat storage material | Melting point (°C) | | | -5 | -3 | -2 | -2 | -2 |
| | Heat storage capacity (J/g) | | | 34 | 33 | 35 | 33 | 38 |
| | Liquid leakage and | | | <1 | <1 | <1 | <1 | <1 |
| | | | volatility (%) | | | | | |
| | | | Heat resistance (°C) | 260 | 260 | 260 | 265 | 270 |

**[Table 10]**

| | | | | Example 2-6 | Example 2-7 | Example 2-8 | Example 2-9 |
|---|---|---|---|---|---|---|---|
| Resin composition | Composition (parts by mass) | Acrylic resin | 2B | 98.0 | - | - | - |
| | | | 2C | - | 98.0 | - | - |
| | | | 2D | - | - | 98.0 | - |
| | | | 2E | - | - | | 98.0 |
| | | Curing agent | E | 2.0 | 2.0 | 2.0 | 2.0 |
| | Viscosity (Pa·s) | | | 3.5 | 4.7 | 3.7 | 5.1 |
| Heat storage material | Melting point (°C) | | | 14 | 27 | -3 | 19 |
| | Heat storage capacity (J/g) | | | 48 | 95 | 33 | 72 |
| | Liquid leakage and volatility (%) | | | <1 | <1 | <1 | <1 |
| | Heat resistance (°C) | | | 260 | 260 | 260 | 265 |

**[Table 11]**

| | | | | Example 2-10 | Example 2-11 | Example 2-12 |
|---|---|---|---|---|---|---|
| Resin composition | Composition (parts by mass) | Acrylic resin | 2F | 98.0 | - | - |
| | | | 2G | - | 98.0 | - |
| | | | 2H | - | - | 98.0 |
| | | Curing agent | E | 2.0 | 2.0 | 2.0 |
| | Viscosity (Pa·s) | | | 4.5 | 3.7 | 3.1 |
| Heat storage material | Melting point (°C) | | | 12 | -5 | 40 |
| | Heat storage capacity (J/g) | | | 49 | 40 | 61 |
| | Liquid leakage and volatility (%) | | | <1 | <1 | <1 |
| | Heat resistance (°C) | | | 270 | 260 | 310 |

**[Table 12]**

| | | | | Example 2-13 | Example 2-14 | Example 2-15 | Example 2-16 | Example 2-17 |
|---|---|---|---|---|---|---|---|---|
| Resin composition | Composition (parts by mass) | Acrylic resin | 21 | 49.6 | 49.0 | 49.2 | 49.0 | 49.0 |
| | | Curing agent | F | 0.4 | 0.2 | - | 0.2 | 0.2 |
| | | | B | - | 0.8 | - | - | - |
| | | | C | - | - | 0.8 | - | - |
| | | | D | - | - | | 0.8 | - |
| | | | A | - | - | - | | 0.8 |
| | | Heat storage capsule | MC37 | 50 | 50 | 50 | 50 | 50 |
| | Viscosity (Pa·s) | | | 40 | 43 | 38 | 38 | 37 |
| Heat storage material | Melting point (°C) | | | 38 | 38 | 37 | 38 | 37 |
| | Heat storage capacity (J/g) | | | 130 | 125 | 125 | 124 | 125 |
| | Liquid leakage and volatility (%) | | | <1 | <1 | <1 | <1 | <1 |
| | Heat resistance (°C) | | | 234 | 235 | 233 | 233 | 237 |

**[Table 13]**

| | | | | Example 2-18 | Example 2-19 | Example 2-20 |
|---|---|---|---|---|---|---|
| Resin composition | Composition (parts by mass) | Acrylic resin | 2B | 49.6 | - | - |
| | | | 2C | - | 49.6 | - |
| | | | 2D | - | - | 49.6 |
| | | Curing agent | F | 0.4 | 0.4 | - |
| | | | C | - | - | 0.4 |
| | | Heat storage capsule | MC-6 | - | 50 | - |
| | | | MC18 | 50 | - | - |
| | | | MC37 | - | - | 50 |
| | Viscosity (Pa·s) | | | 40 | 40 | 38 |
| Heat storage material | Melting point (°C) | | | 18 | 6 | 37 |
| | Heat storage capacity (J/g) | | | 128 | 130 | 131 |
| | Liquid leakage and volatility (%) | | | <1 | <1 | <1 |
| | Heat resistance (°C) | | | 210 | 223 | 230 |

In Tables 5 to 13, the curing agent A indicates 3 or 4-methyl-hexahydrophthalic anhydride, the curing agent B indicates a phenol novolac, the curing agent C indicates isophorone diisocyanate, the curing agent D indicates hexamethylenediamine, the curing agent E indicates 1-cyanoethyl-2-phenylimidazole, the curing agent F indicates 2-ethyl-4-methylimidazole, and MC-6, MC18, and MC37 indicate heat storage capsules BA410xxP, -6C, BA410xxP, 18C, and BA410xxP, 37C (commercially available from Outlast Technology LLC).

The heat storage materials of the examples had an excellent heat storage capacity and also had favorable heat resistance, and could minimize liquid leakage and volatilization. In particular, the heat storage materials of Examples 2-1 to 2-20 were obtained by curing the liquid resin composition, and thus were advantageous in that they were able be applied to a member having a complicated shape.

### [Industrial Applicability]

Since the heat storage material of the present invention has an excellent heat storage capacity and also has favorable heat resistance, and can minimize liquid leakage and volatilization, it can be used without packing with a bag or the like particularly in the fields in which heat resistance is required. In addition, when the resin composition has a liquid form, the heat storage material is obtained by filling and curing the resin composition, and thus can be applied to a member having a complicated shape.

### [Reference Signs List]

1, 11 Electronic component
2 Substrate
3 Semiconductor chip (heat source)
4 Connecting part
5 Syringe
6, 16 Resin composition
7, 17 Heat storage material

## Claims

1. A resin composition comprising an acrylic resin obtained by polymerizing monomer components including a first monomer represented by the following Formula (1) and a second monomer copolymerizable with the first monomer and having a reactive group: 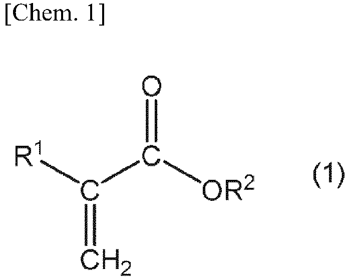 [in the formula, R¹ represents a hydrogen atom or a methyl group, and R² represents a group having a polyoxyalkylene chain].

2. The resin composition according to claim 1, further comprising
a capsule containing a heat storage component.

3. A resin composition comprising an acrylic resin including a first structural unit represented by the following Formula (2) and a second structural unit having a reactive group: 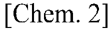 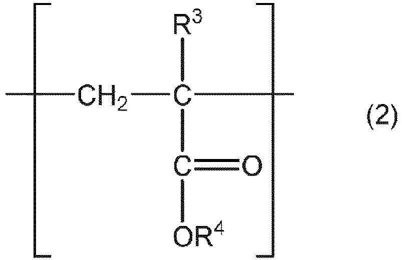 [in the formula, R³ represents a hydrogen atom or a methyl group, and R⁴ represents a group having a polyoxyalkylene chain].

4. The resin composition according to claim 3, further comprising
a capsule containing a heat storage component.

5. The resin composition according to any one of claims 1 to 4, further comprising a curing agent that is able to react with the reactive group.

6. The resin composition according to claim 5,
wherein the curing agent is at least one curing agent selected from the group consisting of an isocyanate curing agent, a phenolic curing agent, an amine curing agent, an imidazole curing agent and an acid anhydride curing agent.

7. The resin composition according to any one of claims 1 to 6,
wherein the reactive group is at least one group selected from the group consisting of a carboxyl group, a hydroxyl group, an isocyanate group, an amino group and an epoxy group.

8. The resin composition according to claim 1 or 2,
wherein the content of the first monomer is 60 parts by mass or more with respect to 100 parts by mass of the monomer components.

9. The resin composition according to any one of claims 1, 2 and 8,
wherein the content of the second monomer is 25 parts by mass or less with respect to 100 parts by mass of the monomer components.

10. The resin composition according to claim 3 or 4,
wherein the content of the first structural unit is 60 parts by mass or more with respect to 100 parts by mass of all structural units constituting the acrylic resin.

11. The resin composition according to any one of claims 3, 4 and 10,
wherein the content of the second structural unit is 25 parts by mass or less with respect to 100 parts by mass of all structural units constituting the acrylic resin.

12. The resin composition according to any one of claims 1 to 11,
wherein the content of the acrylic resin is 30 mass% or more with respect to a total amount of the resin composition.

13. The resin composition according to any one of claims 1 to 12,
wherein the reactive group is an epoxy group.

14. The resin composition according to any one of claims 1 to 13,
wherein the resin composition is a liquid at 80°C.

15. The resin composition according to claim 14,
wherein the viscosity at 80°C is 100 Pa·s or less.

16. The resin composition according to any one of claims 1 to 15,
wherein the resin composition is used to form a heat storage material.

17. A heat storage material comprising a cured product of the resin composition according to any one of claims 1 to 16.

18. An article, comprising:
a heat source; and
a cured product of the resin composition according to any one of claims 1 to 16, the cured product provided to be in thermal contact with the heat source.
